# EUROPEAN PATENT SPECIFICATION

(11) **EP 3 024 117 B1**
(45) Date of publication and mention of the grant of the patent: **23.10.2019**
(21) Application number: 15195488.0
(22) Date of filing: 19.11.2015
(51) Int. Cl.: H02J 7/14, H02P 29/00

(54) **MANAGING SYSTEM OF VEHICULAR GENERATORS OF A VEHICLE PROVIDED WITH TWO OR MORE ELECTRIC GENERATORS, IN PARTICULAR FOR HEAVY VEHICLES SUCH AS TRUCKS OR BUSES**
MANAGEMENTSYSTEM VON FAHRZEUGGENERATOREN EINES FAHRZEUGS MIT ZWEI ODER MEHREREN ELEKTRISCHEN GENERATOREN, INSBESONDERE FÜR SCHWERE FAHRZEUGE WIE LASTKRAFTWAGEN ODER BUSSE
SYSTÈME DE GESTION DE GÉNÉRATEURS DE VÉHICULE MUNI DE DEUX OU DE PLUSIEURS GÉNÉRATEURS ÉLECTRIQUES, EN PARTICULIER POUR VÉHICULES LOURDS TELS QUE DES CAMIONS OU DES BUS

(30) Priority: 19.11.2014 IT TO20140957
(43) Date of publication of application: 25.05.2016
(73) Proprietor: IVECO S.p.A., 10156 Torino (IT)
(72) Inventor: PORRELLO, Gabriele, 10025 Pino Torinese (IT)
(74) Representative: Franzolin, Luigi

(56) References cited:
- GB-A- 641 787
- JP-A- H05 161 273
- US-A1- 2008 067 983
- US-A1- 2009 243 559

## Description

### FIELD OF THE INVENTION

The present invention relates to the field of a managing system of vehicular generators of a vehicle provided with two or more electric generators of the smart type and more specifically to a system of managing the selective functioning of the electric generators defining the electricity generation system on board a vehicle, in particular for heavy vehicles such as trucks or buses.

An example of managing system is disclosed in US2009243559 whose features are in the preamble of claim 1.

### Prior art

Vehicular configurations consisting of two or more vehicular generators to generate the electricity needed for the operation of the various vehicular apparatuses are known of.

It is known that each generator works in different conditions to the other generators connected to the same internal combustion engine.

This occurs for several reasons:
- the aeration conditions may vary from one part to another of the engine compartment,
- the generator has a drive shaft on which a pulley connected by a belt to the drive shaft is keyed, generally a single belt transfers the motion to all the vehicular generators; it is evident that the generator closest to the drive shaft, depending on the direction of traction (opposite to the direction of rotation of the belt), is more stressed mechanically, because the relative bearing must withstand the traction force which is distributed to the remaining services/generators.

Other services are generally the water pump of the refrigeration system of the internal combustion engine, the cooling fan of the refrigeration radiator and possibly the hydro steering.

Added to the above conditions is the fact that the maximum output curve of the alternator is not constant as a function of the engine RPM.

Said output curve in fact has a substantially logarithmic form y = k*ln(x) +z.

Thus, for a given value of engine revolutions, the alternator can deliver a maximum current indicated by said curve. Delivering current values on the maximum output curve or higher, tends to stress the alternator, leading it to overheat.

Therefore, the most adverse operating conditions are when the internal combustion engine runs at idle or a low number of revolutions and the generators are required to deliver a relevant electric current.

Generators of the smart type are also known of, i.e. generators which comprise a processing unit on board said generator, able to manage/control the operation of the electric machine and the operation of the relative current rectifier.

Traditional alternators are fitted with a port L which is used to excite said electric machine and at the same time indicates the delivery status of the electric machine. Instead, smart generators have a pin permitting a serial communication, by means of a BUS type communication channel "lin bus" between the processing board on the generator with the vehicle itself, generally, the vehicular processing unit VCU or the same engine control processing unit ECU. The communication bus allows the interconnection of a master and up to 4 or 6 slaves.

By means of this communication system, the operation of such generators can be accurately controlled, allowing, for example, a more efficient recovery of braking energy, being able to vary the charging voltage of the generator depending on the operating conditions of the vehicle.

### SUMMARY OF THE INVENTION

The purpose of the present invention is to present a managing system of a group of smart generators which manages the delivery of energy selectively between the different generators, in order to maintain their integrity as long as possible.

Within the sphere of the present invention the overall delivery methods remain unchanged. As a result, in the case of regenerative braking, the maximum supply voltage remains unchanged. Similarly, during the advancement of the vehicle at a constant or a substantially constant speed, the generation conditions remain unchanged overall, but the contribution of the individual electric generators is selectively controlled so as not to over-fatigue one with respect to another.

The basic idea of the present invention is to activate the individual generators depending on their respective position relative to the pull of the belt and depending on the respective operating temperature.

Consequently, the activation of the n-th generator is a function of its position relative to the layout of the belt and the temperature reached by the n-th generator with respect to the layout of the belt.

According to a preferred variant of the invention, the activation of a generator can also be managed as a function of the current absorbed by the electric vehicular system.

The present invention also relates to a managing system of vehicular generators of a vehicle provided with two or more generators, in particular for heavy vehicles such as trucks or buses.

A further purpose of the present invention is a method of managing the vehicular generators of a vehicle provided with two or more generators, in particular for heavy vehicles such as trucks or buses.

According to a preferred variant of the invention, the control logic described above is entrusted to a vehicular control unit in data communication with the two or more generators.

According to another preferred variant of the invention, the control logic is distributed between the two or more generators.

A further purpose of the present invention is a vehicle equipped with two or more generators, in particular a heavy vehicle such as a truck or bus equipped with the above-mentioned management system.

The claims form an integral part of the present description, describing preferred variants of the present invention.

### BRIEF DESCRIPTION OF THE FIGURES

Further purposes and advantages of the present invention will be clear from the detailed description below of an example of embodiment thereof (and of its variants) and the appended drawings, provided merely by way of a non-limiting example, wherein:
Figure 1 indicates schematically a belt layout of a vehicle equipped with three generators connected to the same belt layout,
Figure 2 is a flow diagram of a preferred operating mode of the system of the present invention. Identical reference numerals and letters in the drawings refer to the same elements or components.

### DETAILED DESCRIPTION OF EMBODIMENTS

In a vehicle equipped with two or more generators, a power take-off PTO, generally, referred to as a front PTO, distributes the drive torque by means of a belt BL to the different services on board, including for example, three smart generators G1, G2, G3. S1 is any device drawing drive torque from the same PTO such as the water pump of the refrigeration system of the internal combustion engine E, the cooling fan of the refrigeration radiator and possibly the hydro steering.

The vehicular electrical system comprises an electrical power grid to which the various electric loads and devices are connected, among which the vehicle batteries.

The presence of Sl or additional devices as well as the respective allocation in the belt layout is entirely optional and may vary case by case.

Observing a rotation of the belt BL in the anti-clockwise direction for example, the first generator which receives the motion from the PTO is G1, then G2, and lastly G3. A so-called "belt layout" or order of traction is thus defined. From the above, it is evident that G1 is the most stressed generator, since its bearing must withstand the traction relative to G2, S1 and G3.

Conversely, G3 is the least mechanically stressed generator.

According to the present invention, G3 is the generator which is activated first of all to provide energy to the vehicular electrical system.

As the operating temperature of G3 increases G2 is activated and as the temperature of G2 increases G1 is activated.

Conversely, as the temperature of G2 decreases, G1 is deactivated and as the temperature of G3 decreases, G2 is deactivated.

The activation and deactivation temperature thresholds may be chosen to be sufficiently spaced apart as to avoid conditions of continuous activation/deactivation.

Consequently, according to the present invention, the first generator to be activated is the one furthest from the PTO in the reverse direction relative to the direction of rotation of the belt BL or, equivalently, the first generator to be activated is the one closest to the PTO moving in the same direction of rotation as the belt BL. Following this second indication, entirely equivalent to the first, the second generator G2 that is encountered is activated when the first generator G1 reaches or exceeds a predefined temperature threshold, and so on.

According to a preferred variant of the invention, to avoid excessive thermal stress to the generators, the activation of these generators can also be managed as a function of the overall current absorbed by the vehicular electric grid.

Therefore, each generator G1 - G3, as a function of the engine revolutions of the internal combustion engine E, monitors the relative current supplied or its condition of efficiency compared to the relative curve of maximum efficiency and dispatches a message, one-off or cyclically. This message, in the manner described below, can determine the activation of one or more further generators.

The smart electrical generators G1 - G3 each comprise processing means for the operations described above, namely to control the relative electric machine, but also to monitor the relative temperature and current supplied. In addition, said processing means incorporate a communication interface through which, generally, it is possible to control the supply of electric power from the generator.

In the case of implementing generic smart generators, i.e. available on the market, then, a processing unit on board the vehicle, namely the VCU or the ECU, interfaces with the smart generators controlling the respective activation thereof.

According to this preferred variant of the invention, the VCU or ECU receives from the generators information about the respective temperature and controls the activation of G2, G3, etc.

Preferably, each generator can also despatch information on the relative current supplied and/or condition of efficiency calculated on the basis of the aforesaid relative efficiency curve which in turn is a function of the number of revolutions of the PTO and the current supplied by the generator. So that the VCU or ECU, having received such information from the currently active generators, can command the activation of one or more further generators before those already active reach the aforementioned activation temperature thresholds.

Conversely, when the efficiency of the active generators falls, the VCU or ECU commands a progressive activation of the generators only after verifying that the temperature conditions allow it. For example, if the supply of current decreases drastically, but G2 is still working at a temperature above the activation threshold of G1, G1 continues to remain active, until the temperature of G2 drops below the deactivation threshold of G1.

Therefore, as described above, the activation order is given mainly by the position of the generator on the belt layout, then by the operating temperature and lastly by the overall current supplied by the generators.

According to another preferred variant of the invention, the processing means of the smart generators co-operate with each other, activating and deactivating as a function of the information exchanged and not at the command of a vehicular processing unit VCU or ECU.

Combinations of these variants may be provided for. For example, the "temperature" and "efficiency" activation may be managed by said smart generators, but the VCU or ECU can intervene, if necessary, in the condition of "overrunning" by deciding the selective or global activation of the generators.

This may happen, for example, when a vehicular electric load of considerable power is activated, or in conditions of regenerative braking, therefore, rather than thermally and/or electrically stressing the generators, the VCU immediately commands the activation of a subset or of all the generators available.

The method according to the invention makes it possible to implement a continuous monitoring of the activation/deactivation of each of the electric generators G1 - G3.

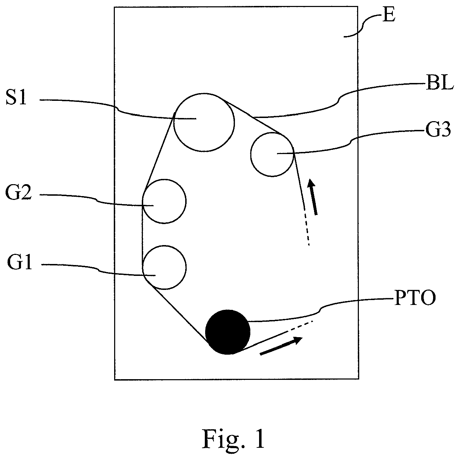

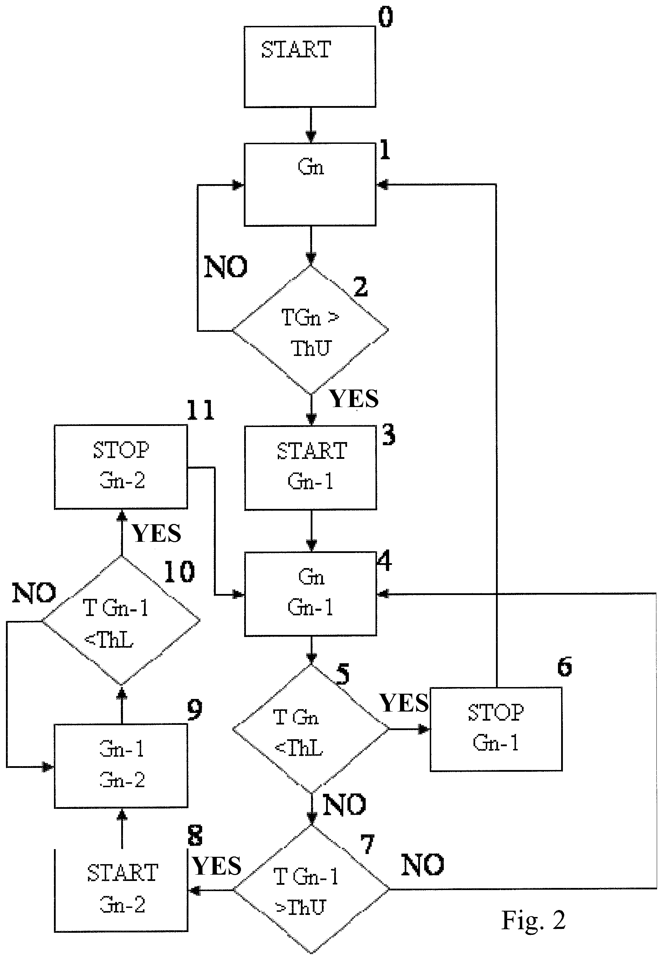

The method is described with reference to the functional block diagram in Figure 2 appended, meaning that the blocks correspond to logic functions performed by the apparatus composing them.
Step 0 corresponds to starting the internal combustion engine E, in which the conditions for activating at least one electric generator are defined. A first electric generator, Gn - G3 in the example in figure 1 - is activated as a function of electricity generation policies, which lie beyond the present description, such as, for example, a condition of normal operation or regenerative braking.
Step 1: monitoring the temperature of Gn;
Step 2: checking the temperature of Gn, if it is NOT greater than a higher activation threshold ThU, then go back to step 1, otherwise go to
Step 3: activating Gn-1, then go to
Step 4: monitoring the temperature of Gn and Gn-1, then go to
Step 5: checking if the temperature of Gn is lower than a lower deactivation threshold then
Step 6: deactivating the generator Gn-1 and go back to step 1; otherwise if the temperature of Gn is NOT lower than a lower deactivation threshold go to
Step 7: checking the temperature of Gn-1, if it is NOT greater than a higher activation threshold ThU, then go back to step 4, otherwise go to
Step 8: activating Gn-2, then go to
Step 9: monitoring the temperature of Gn-1 and Gn-2, then go to
Step 10: checking if the temperature of Gn-1 is lower than a lower deactivation threshold then go to
Step 11: deactivating the generator Gn-2 and go back to step 4; otherwise if the temperature of Gn-1 is NOT lower than a lower deactivation threshold ThL go back to step 9.

The return to a step already described implies following the cycle according to the relative description and related arrows shown in Figure 2.

In the example of Figure 2 a generalisation has intentionally been made, indicating G3 as Gn, G2 as Gn-1, G1 as Gn-2, etc. meaning that the generators may be two or more in number. It is therefore equivalent to substitute G1, G2, G3 with Gn- 2, Gn-1, Gn.

The present invention can be advantageously realized by a computer program that comprises coding means for the realization of one or more steps of the method, when this program is run on a computer. It is therefore understood that the scope of protection extends to said computer program and furthermore to computer-readable media that comprise a recorded message, said computer-readable media comprising program coding means for the realization of one or more steps of the method when said program is run on a computer.

Embodiment variants may be made to the non-limiting example described, while remaining within the scope of protection of the present invention.

From the above description a person skilled in the art may make the object of the invention without introducing any further construction details. The elements and features shown in the various preferred embodiments may be combined while remaining within the scope of protection of the present application. The content of the description of the state of the art, unless specifically excluded in the detailed description, should be considered in combination with the features of the present invention, forming an integral part of the present invention.

## Claims

1. A system of vehicular generators of a vehicle provided with two or more electric generators, in particular for heavy vehicles such as trucks or buses, each electric generator being of an smart type, provided with its own processing means and communicating data means, said one or more electric generators being operatively connected to a PTO by means of a belt (BL) defining a movement direction, **characterized in that** said movement direction identifies a first electric generator (G3) and then a second electric generator (G2) along said movement direction starting from said PTO; and **in that** said system comprises processing means (VCU, ECU, G3, G2, etc.) configured to manage an activation of said first electric generator (G3) and configured to manage an activation of said second electric generator (G2) when a temperature of said first electric generator (G3) exceeds a predefined activation threshold (ThU).

2. The system according to claim 1, wherein said processing means (VCU, ECU, G3, G2, etc.) are configured to manage a deactivation of said second electric generator (G2) when a temperature of said first electric generator (G3) is lower than a predefined deactivation threshold (ThL), lower than said predefined activation threshold (ThU).

3. The system according to one of the preceding claims, wherein said processing means (VCU, ECU, G3, G2, etc.) are configured to manage an activation of a third electric generator (G1) further along said movement direction when a temperature of said second electric generator (G2) exceeds said predefined activation threshold (ThU).

4. The system according to claim 3, wherein said processing means (VCU, ECU, G3, G2, etc.) are configured to manage a deactivation of said third electric generator (G1) when a temperature of said second electric generator (G2) is lower than said predefined deactivation threshold (ThL), lower than said predefined activation threshold (ThU).

5. The system according to any one of the preceding claims 1 to 4, wherein said processing means (VCU, ECU, G3, G2, etc.) are configured to manage an activation of said second and/or of a further electric generator (G2 and/or G3) when a current supplied by said first electric generator (G1) exceeds a predefined current threshold.

6. The system according to any one of the preceding claims 1 to 4, wherein said processing means (VCU, ECU, G3, G2, etc.) are configured to manage an activation of said second and/or of a further electric generator (G2 and/or G3) when an efficiency of said first electric generator (G1) is close to or exceeds a maximum efficiency value.

7. The system according to claim 6, wherein said efficiency value is a function of a number of revolutions of said PTO and of a supplied current value.

8. The system according to any one of the preceding claims 1-7, wherein said processing means (VCU, ECU, G3, G2, etc.) are configured to manage an activation of a sub-set or of all the electric generators, according to certain predefined conditions, taking precedence over all the steps of any one of the preceding claims.

9. A vehicular generators managing method of a vehicle provided with two or more electric generators, in particular for heavy vehicles such as trucks or buses, each electric generator being of an smart type, provided with its own processing means and communicating data means, said one or more electric generators being operatively connected to a PTO by means of a belt (BL) defining a movement direction, **characterized in that** said movement direction identifies a first electric generator (G3) and then a second electric generator (G2) along said movement direction starting from said PTO and **in that** said managing method comprises a step of managing an activation of said first electric generator (G3) and a following step of managing an activation of said second electric generator (G2) when a temperature of said first electric generator (G3) exceeds a predefined activation threshold (ThU).

10. The method according to claim 9, further comprising a step of managing a deactivation of said second electric generator (G2) when a temperature of said first electric generator (G3) is lower than a predefined deactivation threshold (ThL), lower than said predefined activation threshold (ThU).

11. The method according to one of the preceding claims 9 or 10 comprising the following steps in sequence:
Step 1: monitoring the temperature of said first electric generator (Gn);
Step 2: checking the temperature of said first electric generator (Gn), if it is NOT greater than a predefined activation threshold (ThU), then go back to step 1, otherwise go to
Step 3: activating said second electric generator (Gn-1), then go to
Step 4: monitoring the temperature of said first (Gn) and second (Gn-1) electric generator, then go to
Step 5: checking if the temperature of said first electric generator (Gn) is lower than a lower deactivation threshold (ThL) then
Step 6: deactivating the second electric generator (Gn-1) and go back to step 1; otherwise if the temperature of the first electric generator (Gn) is NOT lower than a lower deactivation threshold of (ThL) go to
Step 7: checking the temperature of said second electric generator (Gn-1), if it is NOT greater than a higher activation threshold (ThU), then go back to step 4, otherwise go to
Step 8: activating a third electric generator further along said movement direction, then go to
Step 9: monitoring the temperature of said second (Gn-1) and third (Gn-2) electric generator, then go to
Step 10: checking if the temperature of said second electric generator (Gn-1) is lower than a lower deactivation threshold then go to
Step 11: deactivation of said third electric generator generator (Gn-2) and go back to step 4, otherwise, if the temperature of said second electric generator (Gn-1) is NOT lower than a lower deactivation threshold (ThL) then go back to step 9.

12. A vehicle provided with two or more smart electric generators, in particular a heavy vehicle such as a truck or a bus, **characterized by** comprising an internal combustion engine and a system of said smart electric generators according to any one of claims 1 to 8.

13. A computer program comprising program codes which, when the program is executed by a computer, cause the computer to carry out all the steps of any one of claims 9 - 11.

14. Computer-readable storage medium carrying the computer program of claim 13.

## Patentansprüche

1. Ein System aus Fahrzeuggeneratoren eines Fahrzeuges, versehen mit zwei oder mehreren elektrischen Generatoren, insbesondere für schwere Fahrzeuge wie Lastkraftwagen oder Busse, wobei jeder elektrische Generator von einem intelligenten Typ ist, versehen mit seinen eigenen Verarbeitungsmitteln und Datenkommunikationsmitteln, wobei der oder die elektrischen Generatoren operativ mit einem Nebenabtrieb (PTO) über einen Riemen (BL) verbunden sind, der eine Bewegungsrichtung definiert, **dadurch gekennzeichnet, dass** die Bewegungsrichtung einen ersten elektrischen Generator (G3) definiert und dann entlang dieser Bewegungsrichtung einen zweiten elektrischen Generator (G2), ausgehend von dem Nebenabtrieb (PTO); und dass dieses System Verarbeitungsmittel (VCU, ECU, G3, G2, etc.) umfasst, konfiguriert zur Steuerung einer Aktivierung des genannten ersten elektrischen Generators (G3) sowie konfiguriert zur Steuerung einer Aktivierung des zweiten elektrischen Generators (G2), wenn eine Temperatur des ersten elektrischen Generators einen vordefinierten Aktivierungs-Schwellenwert (ThU) überschreitet.

2. Ein System nach Anspruch 1, wobei die Verarbeitungsmittel (VCU, ECU, G3, G2, etc.) konfiguriert sind zur Steuerung einer Deaktivierung des zweiten elektrischen Generators (G2), wenn eine Temperatur des ersten Generators (G3) niedriger ist als ein vordefinierter Deaktivierungs-Schwellenwert (ThL), wobei dieser niedriger ist als der vordefinierte Aktivierungs-Schwellenwert (ThU).

3. Ein System nach einem der vorstehenden Ansprüche, wobei die Verarbeitungsmittel (VCU, ECU, G3, G2, etc.) konfiguriert sind zur Steuerung einer eine Aktivierung eines dritten elektrischen Generators (G1) weiter entlang der Bewegungsrichtung, wenn eine Temperatur des zweiten Generators (G2) den vordefinierten Aktivierungs-Schwellenwert (ThU) überschreitet.

4. Ein System nach Anspruch 3, wobei die Verarbeitungsmittel (VCU, ECU, G3, G2, etc.) konfiguriert sind zur Steuerung einer Deaktivierung des dritten elektrischen Generators (G1), wenn eine Temperatur des zweiten Generators (G2) niedriger ist als der vordefinierte Deaktivierungs-Schwellenwert (ThL), wobei dieser niedriger ist als der vordefinierte Aktivierungs-Schwellenwert (ThU).

5. Ein System nach einem der Ansprüche 1 bis 4, wobei die Verarbeitungsmittel (VCU, ECU, G3, G2, etc.) konfiguriert sind zur Steuerung einer Aktivierung des zweiten und/oder eines weiteren elektrischen Generators (G2 und/oder G3), wenn ein Strom, der vom ersten elektrischen Generator (G1) geliefert wird, einen vordefinierten Strom-Schwellenwert überschreitet.

6. Ein System nach einem der Ansprüche 1 bis 4, wobei die Verarbeitungsmittel (VCU, ECU, G3, G2, etc.) konfiguriert sind zur Steuerung einer Aktivierung des zweiten und/oder eines weiteren elektrischen Generators (G2 und/oder G3), wenn ein Wirkungsgrades ersten elektrischen Generators (G1) nahe eines maximalen Wirkungsgradwertes ist oder diesen überschreitet.

7. Ein System nach Anspruch 6, wobei der Wirkungsgradwert eine Funktion einer Drehzahl des Nebenabtriebs (PTO) und eines gelieferten Stromwertes ist.

8. Ein System nach einem der Ansprüche 1 bis 7, wobei die Verarbeitungsmittel (VCU, ECU, G3, G2, etc.) konfiguriert sind zur Steuerung einer Aktivierung eines Teils oder aller elektrischen Generatoren, gemäß bestimmten vordefinierten Bedingungen, vorrangig vor allen Schritten von jedem der vorstehenden Ansprüche.

9. Eine Fahrzeuggenerator-Steuerverfahren eines Fahrzeuges, welches ausgestattet ist mit zwei oder mehr elektrischen Generatoren, insbesondere für schwere Fahrzeuge wie LKWs oder Busse, wobei jeder elektrische Generator von einem intelligenten Typ ist, versehen mit seinen eigenen Verarbeitungsmitteln und Datenkommunikationsmitteln, wobei der oder die elektrischen Generatoren operativ mit einem Nebenabtrieb (PTO) über einen Riemen (BL) verbunden sind, der eine Bewegungsrichtung definiert, **dadurch gekennzeichnet, dass** die Bewegungsrichtung einen ersten elektrischen Generator (G3) definiert und dann entlang dieser Bewegungsrichtung einen zweiten elektrischen Generator (G2), ausgehend von dem Nebenabtrieb (PTO), und dass das Steuerverfahren einen Schritt einer Steuerung einer Aktivierung des ersten elektrischen Generators (G3) und einen folgenden Schritt einer Steuerung einer Aktivierung des zweiten elektrischen Generators (G2) umfasst, wenn eine Temperatur des ersten elektrischen Generators (G3) einen vordefinierten Aktivierungs-Schwellenwert (ThU) überschreitet.

10. Ein Verfahren nach Anspruch 9, des Weiteren umfassend einen Schritt einer Steuerung einer Deaktivierung des zweiten elektrischen Generators (G2), wenn eine Temperatur des ersten elektrischen Generators (G3) niedriger ist als ein vordefinierter Deaktivierungs-Schwellenwert (ThL), wobei dieser niedriger ist als der vordefinierte Aktivierungs-Schwellenwert (ThU).

11. Ein Verfahren nach einem der vorstehenden Ansprüche 9 oder 10, umfassend die folgende Schrittabfolge:
Schritt 1: Überwachung der Temperatur des ersten elektrischen Generators (Gn);
Schritt 2: Überprüfung der Temperatur des ersten elektrischen Generators (Gn), falls diese NICHT größer ist als ein vordefinierter Aktivierungs-Schwellenwert (ThU), gehe zurück zu Schritt 1, ansonsten gehe zu
Schritt 3: Aktivierung des zweiten elektrischen Generators (Gn-1), dann gehe zu
Schritt 4: Überwachung der Temperatur des ersten (Gn) und des zweiten (Gn-1) elektrischen Generators, dann gehe zu
Schritt 5: Überprüfung, ob die Temperatur des ersten elektrischen Generators (Gn) niedriger ist als ein niedriger Deaktivierungs-Schwellenwert (ThL), dann
Schritt 6: Deaktivierung des zweiten elektrischen Generators (Gn-1) und gehe zurück zu Schritt 1; ansonsten falls die Temperatur des ersten elektrischen Generators (Gn) NICHT niedriger ist als ein unterer Deaktivierungs-Schwellenwert (ThL), gehe zu
Schritt 7: Messung der Temperatur des zweiten elektrischen Generators (Gn-1), falls diese NICHT höher ist als ein höherer Aktivierungs-Schwellenwert (ThU), gehe zurück zu Schritt 4, andernfalls gehe zu
Schritt 8: Aktivierung eines dritten elektrischen Generators weiter entlang der Bewegungsrichtung, dann gehe zu
Schritt 9: Überwachung der Temperatur des zweiten (Gn-1) und des dritten (Gn-2) elektrischen Generators, dann gehe zu
Schritt 10: Überprüfung, ob die Temperatur des zweiten elektrischen Generators (Gn-1) niedriger ist als ein unterer Deaktivierungs-Schwellenwert (ThL), dann gehe zu
Schritt 11: Deaktivierung des dritten elektrischen Generators (Gn-2) und gehe zurück zu Schritt 4, ansonsten, falls die Temperatur des zweiten elektrischen Generators (Gn-1) NICHT niedriger ist als ein niedriger Deaktivierungs-Schwellenwert (ThL), gehe zurück zu Schritt 9.

12. Ein Fahrzeug ausgestattet mit zwei oder mehr intelligenten elektrischen Generatoren, insbesondere ein schweres Fahrzeug wie ein LKW oder ein Bus, **dadurch gekennzeichnet, dass** es einen Verbrennungsmotor und ein System aus intelligenten elektrischen Generatoren nach einem der Ansprüche 1-8 umfasst.

13. Ein Computerprogramm, umfassend Programmcode, welcher, wenn das Programm von einem Computer ausgeführt wird, bewirkt, dass der Computer alle Schritte von einem der Ansprüche 9 bis 11 ausführt.

14. Ein computerlesbares Speichermedium, welches das Computerprogramm aus Anspruch 13 enthält.

## Revendications

1. Système de générateurs véhiculaires d'un véhicule pourvu de deux ou plus générateurs électriques, en particulier pour véhicules lourds tels que des camions ou des bus, chaque générateur électrique étant d'un type intelligent, pourvu de ses propres moyen de traitement et moyen de données de communication, lesdits un ou plusieurs générateurs électriques étant opérationnellement reliés à une prise de force PTO à l'aide d'une courroie (BL) définissant une direction de déplacement, **caractérisé en ce que** ladite direction de déplacement identifie un premier générateur électrique (G3) puis un deuxième générateur électrique (G2) le long de ladite direction de déplacement à partir de ladite PTO ; et **en ce que** ledit système comprend des moyens de traitement (VCU, ECU, G3, G2, etc.) configurés pour gérer une activation dudit premier générateur électrique (G3) et configurés pour gérer une activation dudit deuxième générateur électrique (G2) quand une température dudit premier générateur électrique (G3) dépasse un seuil d'activation prédéfini (ThU).

2. Système selon la revendication 1, dans lequel lesdits moyens de traitement (VCU, ECU, G3, G2, etc.) sont configurés pour gérer une désactivation dudit deuxième générateur électrique (G2) quand une température dudit premier générateur électrique (G3) est inférieure à un seuil de désactivation prédéfini (ThL), inférieur audit seuil d'activation prédéfini (ThU).

3. Système selon l'une des revendications précédentes, dans lequel lesdits moyens de traitement (VCU, ECU, G3, G2, etc.) sont configurés pour gérer une activation d'un troisième générateur électrique (G1) plus loin le long de ladite direction de déplacement quand une température dudit deuxième générateur électrique (G2) dépasse ledit seuil d'activation prédéfini (ThU).

4. Système selon la revendication 3, dans lequel lesdits moyens de traitement (VCU, ECU, G3, G2, etc.) sont configurés pour gérer une désactivation dudit troisième générateur électrique (G1) quand une température dudit deuxième générateur électrique (G2) est inférieure audit seuil de désactivation prédéfini (ThL), inférieur audit seuil d'activation prédéfini (ThU).

5. Système selon l'une quelconque des revendications précédentes 1 à 4, dans lequel lesdits moyens de traitement (VCU, ECU, G3, G2, etc.) sont configurés pour gérer une activation dudit deuxième et/ou d'un générateur électrique supplémentaire (G2 et/ou G3) quand un courant fourni par ledit premier générateur électrique (G1) dépasse un seuil de courant prédéfini.

6. Système selon l'une quelconque des revendications précédentes 1 à 4, dans lequel lesdits moyens de traitement (VCU, ECU, G3, G2, etc.) sont configurés pour gérer une activation dudit deuxième et/ou d'un générateur électrique supplémentaire (G2 et/ou G3) quand un rendement dudit premier générateur électrique (G1) est proche ou dépasse une valeur de rendement maximale.

7. Système selon la revendication 6, dans lequel ladite valeur de rendement est une fonction d'un nombre de tours de ladite PTO et d'une valeur de courant apporté.

8. Système selon l'une quelconque des revendications précédentes 1-7, dans lequel lesdits moyens de traitement (VCU, ECU, G3, G2, etc.) sont configurés pour gérer une activation d'un sous-ensemble ou de la totalité des générateurs électriques, selon certaines conditions prédéfinies, prenant le pas sur toutes les étapes selon l'une quelconque des revendications précédentes.

9. Procédé de gestion de générateurs véhiculaires d'un véhicule pourvu de deux ou plus générateurs électriques, en particulier pour véhicules lourds tels que des camions ou des bus, chaque générateur électrique étant d'un type intelligent, pourvu de ses propres moyen de traitement et moyen de données de communication, lesdits un ou plusieurs générateurs électriques étant opérationnellement reliés à une prise de force PTO à l'aide d'une courroie (BL) définissant une direction de déplacement, **caractérisé en ce que** ladite direction de déplacement identifie un premier générateur électrique (G3) puis un deuxième générateur électrique (G2) le long de ladite direction de déplacement à partir de ladite PTO et **en ce que** ledit procédé de gestion comprend une étape de gestion d'une activation dudit premier générateur électrique (G3) et une étape suivante de gestion d'une activation dudit deuxième générateur électrique (G2) quand une température dudit premier générateur électrique (G3) dépasse un seuil d'activation prédéfini (ThU).

10. Procédé selon la revendication 9, comprenant en outre une étape de gestion d'une désactivation dudit deuxième générateur électrique (G2) quand une température dudit premier générateur électrique (G3) est inférieure à un seuil de désactivation prédéfini (ThL), inférieur audit seuil d'activation prédéfini (ThU).

11. Procédé selon l'une des revendications précédentes 9 ou 10 comprenant les étapes suivantes en série :
Étape 1 : contrôler la température dudit premier générateur électrique (Gn) ;
Étape 2 : vérifier la température dudit premier générateur électrique (Gn), si elle N'est PAS supérieure à un seuil d'activation prédéfini (ThU), revenir alors à l'étape 1, sinon aller à
Étape 3 : activer ledit deuxième générateur électrique (Gn-1), puis aller à
Étape 4 : contrôler la température desdits premier (Gn) et deuxième (Gn-1) générateurs électriques, puis aller à
Étape 5 : vérifier si la température dudit premier générateur électrique (Gn) est inférieure à un seuil de désactivation inférieur (ThL) puis
Étape 6 : désactiver le deuxième générateur électrique (Gn-1) puis retourner à l'étape 1 ; sinon si la température du premier générateur électrique (Gn) N'est PAS inférieure à un seuil de désactivation inférieur de (ThL) aller à
Étape 7 : vérifier la température dudit deuxième générateur électrique (Gn-1), si elle N'est PAS supérieure à un seuil d'activation supérieur (ThU), alors retourner à l'étape 4, sinon aller à
Étape 8 : activer un troisième générateur électrique plus loin le long de ladite direction de déplacement, puis aller à
Étape 9 : contrôler la température desdits deuxième (Gn-1) et troisième (Gn-2) générateurs électriques, puis aller à
Étape 10 : vérifier si la température dudit deuxième générateur électrique (Gn-1) est inférieure à un seuil de désactivation inférieur puis aller à
Étape 11 : désactiver ledit troisième générateur électrique (Gn-2) et retourner à l'étape 4, sinon, si la température dudit deuxième générateur électrique (Gn-1) N'est PAS inférieure à un seuil de désactivation inférieur (ThL) alors retourner à l'étape 9).

12. Véhicule pourvu de deux ou plus générateurs électriques intelligents, en particulier un véhicule lourd tel qu'un camion ou un bus, **caractérisé en ce qu'**il comprend un moteur à combustion interne et un système desdits générateurs électriques intelligents selon l'une quelconque des revendications 1 à 8.

13. Programme informatique comprenant des codes de programme qui, quand le programme est exécuté par un ordinateur, amènent l'ordinateur à réaliser toutes les étapes selon l'une quelconque des revendications 9-11.

14. Support de stockage lisible par ordinateur portant le programme informatique selon la revendication 13.
